# EUROPEAN PATENT APPLICATION

(11) **EP 0 885 708 A1**
(43) Date of publication of application: **23.12.1998**
(21) Application number: 97830700.7
(22) Date of filing: 23.12.1997
(51) Int. Cl.: B29C 45/28

(54) **An injection nozzle with sliding torpedo**

(30) Priority: 19.06.1997 IT AN970035
(71) Applicant: ACRILUX S.p.A., I-62019 Recanati (IT)
(72) Inventor: Bellesi, Paolo, Macerata (IT); Moretti, Sergio, Recanati (MC) (IT); Cingolani, Nazzareno, Recanati (MC) (IT)
(74) Representative: Baldi, Claudio

(57) **Abstract**

This invention concerns an injection nozzle for moulding thermoplastic materials fitted with a "torpedo" sliding in a duct separated from the feed channel but opening into the same injection hole with which the feed channel terminates. A spring being provided to push and keep the "torpedo" in its maximum forward position when the mould is opened.

## Description

This design patent application concerns an injection nozzle for moulding thermoplastic materials fitted with sliding "torpedo".

The nozzle in question is of the type generally known in the sector as "torpedo" nozzles and is characterised by a tapered heated body (the so-called torpedo) positioned in the feed channel and terminating with its end against the centre of the injection hole of the mould.

This special type of "torpedo" nozzle is designed to resolve two problems which typically occur in conventional nozzles (namely those without "torpedo") when the mould is opened after the injection stage.

The first problem is the uncontrolled dripping of moulding material through the injection hole of the nozzle as a result of the slight residual pressure in the material which remains in the feed channel of the nozzle even after injection.

In addition to the above dripping problem, often when the mould is opened threads of thermoplastic material are produced which are pulled off with the moulded part from the hole of the injection nozzle.

Another and no less serious problem is the formation of an irregular swell on the external surface of the part on the injection point area caused when the injection jet breaks at the separation section between the hot material remaining in the nozzle and the cold material in the moulded part.

In order to remove this swell mechanically the part must be rubbed and polished.

It is evident that longer the part is cooled in the injection hole of the nozzle the larger the swelling will be.

Accordingly to resolve the above problem a tapered body (known as "torpedo") whose tip terminates at the centre of the injection hole, suitably heated to keep the material remaining in said hole hot and fluid is fitted in the feed channel so that the break section is as close as possible to the surface of the part consequently reducing the dimensions of the above swelling considerably.

It should be noted however that the correctly positioning of the "torpedo" in the feed channel of the nozzle is not always simple in that it must be selected in order to meet both contrasting requirements at the same time.

When the mould is opened, in order to prevent dripping and the formation of moulding threads at the injection hole of the nozzle, the tip of the "torpedo" must be pushed deep into said hole so as to plug most of the space through which material can flow; the forward positioning of the tip also ensures that the break of the jet is towards the further end of the injection hole since the material remaining in the same is kept hot by the heated tip of the "torpedo".

Excessive obstruction of the injection hole can however produce insupportable losses of load during injection and subject the material to elevated thermal stress and strain due to overheating as a result of the increase in speed caused by reduction of the cross-section of the inner passage of the feed channel.

For all the above reasons the positioning of the "torpedo" in the nozzle becomes a compromise between contrasting requirements.

The scope of this invention is to design a new "torpedo" model whereby the "torpedo" can perform alternating rectilinear strokes so as to assume a maximum backward position during injection and a maximum forward position during opening of the mould.

This objective is attained by allowing the "torpedo" to slide in the injection hole and subjecting the same to the thrust of an expulsion spring which keeps the same at its forward end of stroke position, deep in the injection hole of the nozzle, without however obstructing it.

Said spring is calibrated so that the pressure at which the moulding material is injected is sufficient to overcome the antagonistic thrust of the spring consequently moving the "torpedo" backwards.

In this way the loss of load and material stress during injection as well as the risk of dripping and threading when the mould is opened, are considerably reduced.

For major clarity the description of the nozzle according to the invention continues with reference to the enclosed drawings which are intended purely for purposes of illustration and not in a limiting sense, whereby:

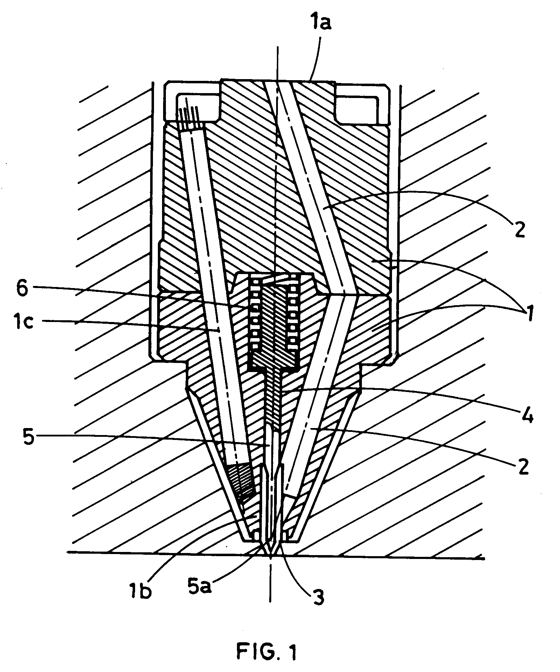

- figure 1 is a cross-section of the nozzle according to the invention on an axial plane passing through the axis of the feed channel and the axis of the "torpedo" housing duct.

With reference to the above figures, the nozzle according to the invention includes a metal body (1) intersected by the feed channel (2) in which the moulding material flows, terminating with an injection hole (3).

The feed channel (2) is not coaxial with respect to the axis of the nozzle (1) but has a broken path starting at the centre of the rear face (1a) and terminating at the centre of the tip (1b) of the nozzle.

The body (1) is provided with deep conventional channels (1c) provided to house conventional electric heater plugs and for the circulation of a heating liquid.

A duct (4) housing a sliding "torpedo" (5) whose tip (5a) fits into the centre of the injection hole (3) without obstructing the same completely, is placed in a perfectly coaxial position with respect to the nozzle (1).

The end section of the said duct (4) in which the above tip (5a) fits, in fact opens into the injection hole (3) with which the feed channel (2) terminates and whose end section joins and coincides with duct (4).

A spring (6) presses the "torpedo" (5) forward keeping it in its maximum forward position.

Said spring (6) is calibrated so that the pressure produced in the feed channel (2) during injection is sufficient to overcome the resistance of the spring (6) so that the "torpedo" (5) automatically tends to move backwards and maintain its back end of stroke position during injection.

When the injection pressure falls, said spring (6) pushes the "torpedo" forward, whose tip (5a) fits into the injection hole (3) without obstructing it completely so as to prevent dripping and material threading through the hole (3) for the time that the mould remains open.

## Claims

1. An injection nozzle with sliding "torpedo" of the type consisting of a heated metal body (1) intersected by a feed channel (2) terminating with an injection hole (3) obstructed partially by the tip (5a) of a "torpedo" (5) characterised in that said "torpedo" (5) is housed and slides in a duct (4) separated from channel (2), coaxial to the axis of the nozzle (1) and opening in the same injection hole (3) with which the feed channel (2) terminates; it being provided that said sliding "torpedo" (5) is subject to the expelling thrust of a spring (6) calibrated to ensure that the pressure in the feed channel (2) injection is sufficient to overcome the resistance of the spring (6).
